# DEMANDE DE BREVET EUROPEEN

(11) **EP 1 713 243 A1**
(43) Date de publication de la demande: **18.10.2006**
(21) Numéro de dépôt: 06112082.0
(22) Date de dépôt: 31.03.2006
(51) Int. Cl.: H04M 3/493

(54) **Procédé et système de génération automatique de composants logiciels pour la conception de services vocaux**

(30) Priorité: 11.04.2005 FR 0503578
(71) Demandeur: FRANCE TELECOM, 75015 Paris (FR)
(72) Inventeur: Paillet, Eric, 22730, TREGASTEL (FR); Dubois, Dominique, 22560, PLEUMEUR-BODOU (FR); Teze, Vincent, 29870, LANDEDA (FR)
(74) Mandataire: Guéné, Patrick Lucien Juan Joseph

(57) **Abrégé**

L'invention concerne un procédé de conception d'un service vocal interactif accessible sur une plate-forme depuis un terminal client. Un tel procédé selon l'invention comprend les étapes suivantes de:
- prétraitement (32) d'un ensemble de données de spécifications se présentant sous la forme d'un fichier de format prédéterminé de spécifications (31) du dialogue définissant le service vocal, de façon à traduire chaque phase du dialogue identifiée dans l'ensemble des données de spécifications sous la forme d'au moins un fichier (33) de description intermédiaire de format prédéterminé ;
- génération (34) automatique d'au moins un composant logiciel (37) constitutif du service vocal, à partir d'au moins un fichier (33) de description intermédiaire et/ou de la recherche de la présence d'un code logiciel à insérer dans le composant logiciel (37), dans une base de données, dite base de données d'exceptions (35), contenant un ensemble d'exceptions prédéterminées pouvant survenir durant la phase de génération automatique d'au moins un composant logiciel (37).

## Description

### 1. Domaine de l'invention

Le domaine de l'invention est celui des services vocaux interactifs, auxquels un utilisateur peut accéder à partir d'un téléphone fixe, d'un téléphone portable ou d'un ordinateur mettant en oeuvre la technologie de la voix sur IP (pour « Internet Protocol »).

À titre d'exemple, le centre d'appel Service Clients Wanadoo (marque déposée) apporte une assistance technique aux utilisateurs Wanadoo (marque déposée) par le biais d'un service vocal interactif. Ce service vocal interactif reçoit les appels des utilisateurs, puis les aiguille vers un service ou un conseiller technique approprié. Un tel service vocal permet en outre de fournir une information à un utilisateur, sans intervention d'un conseiller technique.

Plus précisément, l'invention concerne la conception et le développement de tels services vocaux interactifs.

### 2. État de la technique

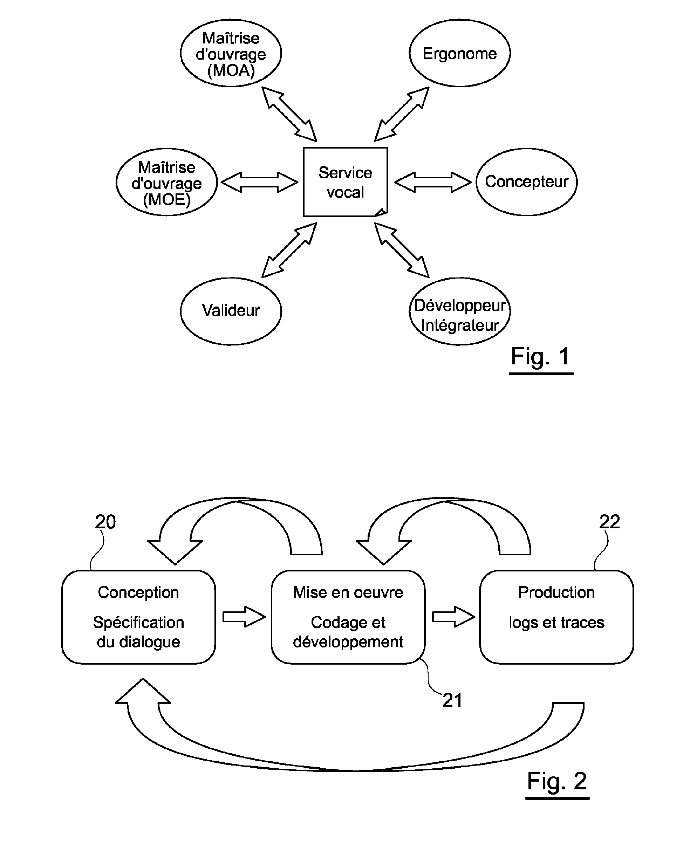

Comme représenté sur la figure 1, la conception de services vocaux interactifs s'inscrit le plus souvent dans une démarche itérative impliquant la collaboration de nombreux acteurs : concepteur(s), maîtrise d'ouvrage, maîtrise d'oeuvre, ergonomes, designers, développeur(s)/intégrateur(s) informaticiens, valideur, etc., et donc, de nombreux allers-retours entre ces derniers, à chacune des étapes de la conception et/ou à chaque évolution et/ou enrichissement d'un service vocal interactif déjà existant et accessible sur une plateforme de services vocaux.

Une telle démarche itérative dans la conception ou dans l'évolution d'un service vocal interactif induit des temps de conception, de développement et/ou de maintenance relativement longs.

Elle nécessite en outre que tout ou partie des développements doivent être reconduits à chaque modification du dialogue définissant le service vocal interactif, ce qui induit nécessairement un coût de développement et/ou de maintenance non négligeable.

En effet, et comme illustré sur la figure 2, la démarche de conception d'applications de services vocaux habituellement retenue dans les techniques de l'art antérieur est le plus souvent cyclique et itérative, entre les étapes de conception 20 proprement dites, de mise en oeuvre 21 et de production 22, et jusqu'à la mise à disposition des utilisateurs sur la plate-forme hôte.

### 3. Objectifs de l'invention

L'invention a notamment pour objectif de pallier ces divers inconvénients de l'état de la technique.

Plus précisément, un objectif de l'invention est de fournir un procédé de conception et de développement qui permette de simplifier la conception, la mise en oeuvre, la maintenance et les évolutions des services vocaux interactifs.

Un autre objectif de l'invention est de proposer un tel procédé qui permette de réduire sensiblement le temps de conception, de mise en oeuvre, de maintenance et/ou d'évolutions des services vocaux interactifs en favorisant la réutilisabilité du code logiciel.

Un objectif supplémentaire de l'invention vise à proposer un tel procédé permettant de générer de façon automatique au moins une partie du code informatique nécessaire pour l'implémentation du service vocal interactif et sa mise à disposition sur une plateforme de services vocaux.

Un dernier objectif de l'invention est de fournir un tel procédé qui soit relativement simple à mettre en oeuvre et de coût raisonnable.

### 4. Résumé de l'invention

Ces objectifs, ainsi que d'autres qui apparaîtront par la suite, sont atteints selon l'invention à l'aide d'un procédé de conception d'un service vocal interactif accessible sur une plate-forme depuis un terminal client. Selon l'invention, un tel procédé comprend avantageusement les étapes suivantes de:
- prétraitement d'un ensemble de données de spécifications se présentant sous la forme d'un fichier de format prédéterminé de spécifications du dialogue définissant le service vocal, de façon à traduire chaque phase du dialogue identifiée dans l'ensemble de données de spécifications sous la forme d'au moins un fichier de description intermédiaire de format prédéterminé ;
- génération automatique d'au moins un composant logiciel constitutif du service vocal, à partir dudit au moins un fichier de description intermédiaire et/ou de la recherche de la présence d'un code logiciel à insérer dans le composant logiciel, dans une base de données, dite base de données d'exceptions, contenant un ensemble d'exceptions prédéterminées.

Préférentiellement, un tel procédé comprend une étape préliminaire à l'étape de génération automatique, de renseignement de l'ensemble des exceptions dans la base de données d'exceptions de façon à associer un code logiciel prédéterminé à chacune des exceptions.

De façon avantageuse, l'étape de génération automatique d'au moins un composant logiciel comprend au moins les sous étapes suivantes :
- d'interprétation automatique d'au moins une expression dudit au moins un fichier de description intermédiaire ;
- de création d'au moins un fichier contenant au moins une liste des guides sonores et/ou des grammaires dudit service vocal ;
- de création de l'ossature de chacun dudit au moins un composant logiciel dans un langage de programmation prédéterminé, l'ossature comprenant au moins l'un des éléments suivants :
   ■ une entête ;
   ■ une liste d'inclusions de fichiers;
   ■ un prototype de méthode et/ou de fonction ;
- de génération d'au moins une partie du code informatique formant ledit au moins un composant logiciel.

De façon préférentielle, le procédé selon l'invention est tel que si la sous-étape d'interprétation automatique ne permet pas d'interpréter une expression dans l'un au moins des fichiers de description intermédiaires, elle génère une exception dont elle recherche la présence dans la base de données d'exceptions, de telle façon que :
- si l'exception générée existe déjà dans la base de données d'exceptions on réalise l'une des sous étapes suivantes de :
   ■ si le code logiciel prédéterminé associé à l'exception n'est pas disponible dans la base de données d'exceptions, insertion de l'exception générée sous la forme d'un commentaire, à l'intérieur du code informatique formant l'un au moins des composants logiciels et ajout de la phase pour laquelle le code informatique n'a pu être complètement généré dans un fichier des phases à finaliser ;
   ■ si le code logiciel prédéterminé associé à l'exception est disponible dans la base de données d'exceptions, insertion du code logiciel prédéterminé à l'intérieur du code informatique formant l'un au moins des composants logiciels ;
- si l'exception générée n'existe pas dans la base de données d'exceptions :
   ■ recopie de l'exception générée dans la base de données des exceptions et déclenchement d'une alerte visant à notifier le besoin d'une mise en correspondance de l'exception générée avec un code informatique correspondant ;
   ■ insertion de l'exception générée sous la forme d'un commentaire, à l'intérieur du code informatique formant l'un au moins des composants logiciels.

De façon avantageuse, pour chaque nouvelle insertion ou modification d'un code logiciel associé à une exception de la base d'exceptions, on réitère l'étape de génération automatique, de façon que le nouveau code logiciel ajouté ou modifié soit inséré dans l'un au moins des composants logiciels correspondant et intervenant dans le service vocal.

Avantageusement, à chaque itération de l'étape de génération, on retire du fichier des phases à finaliser, les phases du service vocal pour lesquelles les composants logiciels ont pu être générés.

De façon préférentielle, l'étape de prétraitement de l'ensemble des données de spécifications est réalisée au moins une fois et comprend au moins les sous-étapes suivantes :
- d'analyse du contenu d'au moins une partie du fichier de spécifications, ladite au moins une partie à analyser étant comprise entre une première balise de début et une deuxième balise de fin ;
- d'extraction des informations utiles représentatives du service vocal interactif depuis le fichier de spécifications, lesdites informations utiles appartenant au groupe comprenant au moins :
   ■ les variables du service ;
   ■ les listes des phases du service ;
   ■ la liste des transitions possibles par phase du service;
   ■ les prompts et/ou les guides sonores à jouer par phase du service ;
   ■ les actions conditionnelles par phase du service;
   ■ les commentaires par phase du service;
   ■ les affectations de variable par phase du service;
   ■ les paramètres d'entrée par phase du service ;
- de contrôle de la cohérence des données du fichier de spécifications, de façon à générer un fichier contenant l'ensemble des éventuelles anomalies détectée durant l'étape de prétraitement.

Préférentiellement, lorsque l'analyse s'effectue sur l'ensemble du fichier de spécifications, la balise de début correspond au début du fichier de spécifications et la balise de fin correspond à la fin du fichier de spécifications.

De façon avantageuse, le fichier de description intermédiaire est décrit dans un format prédéterminé du type appartenant au groupe comprenant au moins les éléments suivants :
- les variables du service vocal interactif et leur type;
- les listes des phases du service.

L'invention concerne également un produit programme d'ordinateur, comprenant avantageusement des instructions de code de programme pour l'exécution de l'ensemble des étapes du procédé précité, lorsque le programme est exécuté dans et/ou par un processeur.

L'invention concerne aussi un dispositif de conception d'un service vocal interactif accessible sur une plate-forme depuis un terminal client. Un tel dispositif comprend avantageusement au moins :
- des moyens de prétraitement d'un ensemble de données de spécifications se présentant sous la forme d'un fichier de format prédéterminé de spécifications du dialogue définissant le service vocal, de façon à traduire chaque phase du dialogue identifiée dans l'ensemble de données de spécifications sous la forme d'au moins un fichier de description intermédiaire de format prédéterminé ;
- des moyens de génération automatique d'au moins un composant logiciel constitutif du service vocal, à partir de l'un au moins des fichiers de description intermédiaires et/ou d'une base de données, dite base de données d'exceptions, contenant un ensemble d'exceptions pouvant survenir durant une phase de génération automatique de l'un au moins des composants logiciels ;
- des moyens de recherche de la présence dans la base de données d'exceptions d'un code logiciel à insérer dans le composant logiciel, lorsqu'une exception survient durant la phase de génération automatique.

De façon également avantageuse, un tel dispositif comprend en outre des moyens d'édition et/ou de sélection des exceptions de la base de données d'exception à utiliser durant la phase de génération automatique.

L'invention concerne également un générateur de code pour service vocal interactif accessible sur une plate-forme depuis un terminal client, comprend un dispositif tel que précité.

L'invention concerne enfin et de façon préférentielle, un service vocal interactif accessible depuis un terminal client sur une plateforme hôte, un tel service étant conçu au moyen d'un générateur de code pour service vocal interactif tel que précité.

L'invention s'inscrit donc parfaitement dans un contexte de simplification et d'optimisation de la conception et du développement de services vocaux interactifs accessibles sur des plateformes dédiées depuis des terminaux clients, notamment de part la possibilité de pouvoir produire de façon automatique tout ou partie des éléments et des enchaînements constitutifs du service vocal interactif à concevoir et/ou enrichir et/ou dont la maintenance doit être assurée, uniquement à partir de simples documents de descriptions intermédiaires de format prédéterminé, et éventuellement en utilisant des morceaux de codes logiciels réutilisables et déjà renseignés dans une base de données d'exceptions pouvant survenir durant l'étape de génération automatique du code logiciel de certains composants logiciels constitutif du service vocal interactif.

### 5. Liste des figures

D'autres caractéristiques et avantages de l'invention apparaîtront plus clairement à la lecture de la description suivante d'un mode de réalisation préférentiel de l'invention, donné à titre d'exemple illustratif et non limitatif, faite en référence aux dessins annexés parmi lesquels :
- la figure 1, déjà présentée en préambule, est un organigramme des différents acteurs intervenants dans la conception et le développement de services vocaux interactifs, selon l'art antérieur ;
- la figure 2, déjà discutée précédemment, illustre le processus cyclique et/ou itératif habituellement rencontré dans la conception et la mise en oeuvre de services vocaux interactifs selon l'art antérieur ;
- la figure 3 donne un synoptique du procédé selon l'invention de génération de code informatique des composants logiciels constitutifs d'un service vocal interactif ;
- la figure 4 illustre le fonctionnement de l'étape de génération automatique de code logiciel du procédé selon l'invention.

### 6. Description d'un mode de réalisation préféré de l'invention

### 6.1 Présentation générale de l'invention

La présente invention concerne donc un procédé de conception d'un service vocal interactif accessible sur une plate-forme depuis un terminal client.

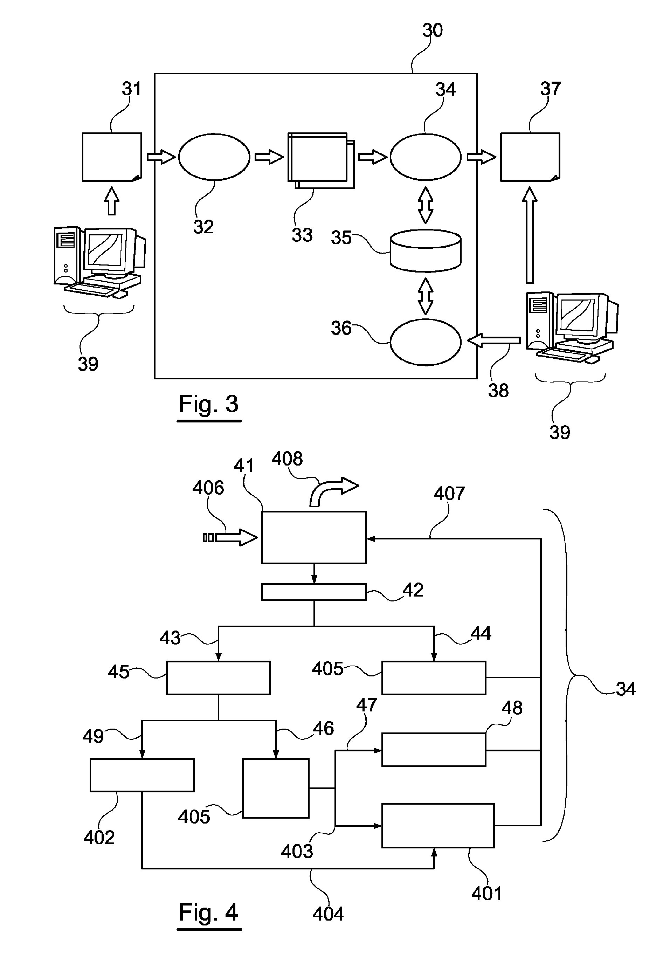

Comme illustré sur la figure 3, la technique selon l'invention permet la production automatique des éléments et des enchaînements constitutifs du service vocal interactif à concevoir, ou à enrichir, ou dont la maintenance doit être assurée. Cette production automatique, qui prend la forme d'une génération automatique 34 de code logiciel s'appuie d'une part sur des documents 31 de spécifications du dialogue à mettre en oeuvre au sein du service vocal et, sur une ou plusieurs bases de données d'exceptions 35, éventuellement associées, respectivement, à du code logiciel réutilisable lors de la génération 34 automatique des composants logiciels intervenant dans le fonctionnement du service vocal.

Ces documents 31 de spécifications de dialogue sont écrits, par exemple par le concepteur ergonome 30 du service vocal, dans un format texte et/ou de description prédéterminé, par exemple MS Word (marque déposée) ou XML (pour « Extensible Markup Language » en anglais). Il est bien entendu que n'importe quel autre format texte et/ou de description peut être utilisé indifféremment dans le cadre de la présente invention.

Les spécifications 31 de dialogue du service vocal sont en outre basées sur l'utilisation d'un formalisme qui autorise notamment la possibilité de différencier les guides sonores, les grammaires du type DTMF (pour « Dual Tone Multi-Frequency ») ou de reconnaissance vocale, devant être activés au fur et à mesure de la navigation de l'utilisateur à l'intérieur du service vocal. Ce formalise autorise en outre la possibilité de pouvoir différencier les différentes étapes du dialogue en fonction des évènements provoqués par l'utilisateur du service vocal interactif, dans sa navigation (choix d'options ou de rubriques dans un menu vocal, par exemple).

Le procédé de conception selon l'invention, tel que précédemment mentionné, met en oeuvre d'une part une étape 32 de prétraitement des données de spécifications 31 du dialogue définissant le service vocal, de façon à traduire chaque phase du dialogue identifiée sous la forme d'au moins un fichier 33 de description intermédiaire de format prédéterminé. D'autre part, il met en oeuvre également une étape 34 de génération automatique d'au moins un composant logiciel 37 constitutif du service vocal, à partir de l'un au moins des fichiers 33 de description intermédiaires et/ou de la recherche de la présence d'un code logiciel à insérer dans le composant logiciel 37, dans une base de données 35, dite base de données d'exceptions. Cette base de donnée contient un ensemble d'exceptions prédéterminées pouvant survenir durant la phase de génération 34 automatique d'au moins un composant logiciel 37.

Ces exceptions sont renseignées 36 dans la base de données des exceptions, tout comme le code logiciel pouvant leur être associé, par exemple par le développeur intégrateur 39 du service vocal.

Dans un mode de réalisation préféré de l'invention et comme illustré sur la figure 4, l'étape de génération automatique s'effectue en deux phases.

Dans une première phase, l'étape de génération automatique prend en entrée la description du dialogue basée sur un formalisme ad-hoc (MS Word, ou XML, par exemple). Les différentes étapes du dialogue du service vocal sont traduites d'une façon indépendante de l'implémentation du service vocal interactif, sous la forme d'un ensemble de fichiers intermédiaires de description des phases du service vocal, issus de l'étape de prétraitement.

Dans une deuxième phase, l'étape de génération utilise les fichiers intermédiaires de description traduits à la première phase et cherche à produire automatiquement des composants logiciels, par exemple écrits dans un code Java, C, etc. (marques déposées), dépendants des contraintes d'implémentation du service vocal.

L'étape 34 de génération automatique s'appuie donc sur le résultat de l'étape de prétraitement des données du fichier de spécifications du dialogue. Cette étape a pour fonction principale, d'une part d'extraire les informations utiles (variables, listes des phases, etc. du service vocal interactif) et, d'autre part, d'offrir un contrôle de la cohérence des spécifications. Ce contrôle s'effectue notamment au moyen d'une vérification que toutes les variables et les transitions qui doivent être utilisées et mises en oeuvre dans le service vocal interactif sont bien déclarées dans le fichier de spécifications.

La fonction essentielle de l'étape de génération automatique de code logiciel est de produire automatiquement le maximum des lignes de code informatique (dans un langage de programmation prédéterminé, Java, C, C++, etc. par exemple) nécessaire à l'implémentation des composants logiciels dont l'exécution, rendra le service vocal interactif accessible à des utilisateurs sur la plateforme de services vocaux.

Dans un mode de réalisation préféré de l'invention, l'étape de génération automatique s'appuie sur une base de données d'exceptions référençant tous les éléments et/ou les transitions du dialogue qu'elle n'a pu automatiquement traduire 43. Ainsi, lorsque l'étape 34 de génération automatique ne permet pas de transcrire automatiquement un élément constitutif du dialogue du service vocal, à partir de la lecture 41 et de l'analyse 42 du contenu (phrase et/ou expressions, par exemple) des fichiers intermédiaires de descriptions issus de l'étape de prétraitement, elle effectue une recherche 45 à l'intérieur de la base de données des exceptions, pour tenter de trouver une occurrence d'une exception générée dans cette dernière et éventuellement un code logiciel associé à celle-ci pouvant être réutilisé directement. Si l'exception générée est déjà présente 46 à l'intérieur de la base de données des exceptions et que, suite à une recherche 409 dans la base de données d'exceptions, du code logiciel lui a été préalablement associé 47 dans cette même base de données par le développeur/concepteur du service vocal, lors de la phase de prétraitement, ou bien lors d'une précédente itération de l'étape de génération automatique, le code logiciel associé à l'exception dont l'occurrence a été trouvée dans la base de données des exceptions est alors inséré 48 à l'intérieur du composant logiciel dont le code est généré.

Selon l'invention, une telle gestion des exceptions dans la génération automatique de code logiciel est essentielle en ce sens qu'elle permet d'associer des traitements prédéterminés aux exceptions présentes dans la base de données des exceptions. Le développeur/concepteur du service vocal interactif n'a donc plus qu'à se contenter de renseigner le contenu de cette base de données par le code logiciel à utiliser automatiquement, dès lors qu'une exception correspondant à une impossibilité de traduire automatiquement un élément constitutif du dialogue du service vocal, se produit durant la phase de génération automatique.

Ainsi, lorsqu'une exception a été préalablement renseignée et que du code logiciel lui a été associé en base de données, la génération automatique récupère le code logiciel correspondant dans la base de données des exceptions et l'insère directement dans le code informatique du composant logiciel généré.

A l'inverse, lorsque l'exception n'a pas encore été renseignée 49, la génération insère 401, 404 dans le code informatique du composant logiciel à générer un commentaire à destination du développeur du service vocal, lui « expliquant » quelles phases du service vocal doivent bénéficier d'un développement logiciel complémentaire et l'exception est ajoutée 402 dans la base de données d'exceptions.

De plus, si l'exception est déjà présente 46 dans la base de données d'exceptions, mais qu'aucun code logiciel ne lui a encore été associé 403 dans cette dernière, la génération insère 401 également dans le code informatique du composant logiciel à générer un commentaire à destination du développeur du service vocal, lui expliquant quelles phases du service vocal doivent bénéficier d'un développement logiciel complémentaire.

Enfm, si la génération parvient 44 à interpréter le contenu (phrases ou expressions, etc.) des fichiers intermédiaires de description du service vocal, à la suite de la lecture 41 et de l'analyse 42, le code logiciel correspondant est généré et écrit 405 dans l'un des composants logiciels constitutifs du service vocal.

L'étape de génération automatique selon l'invention débute 406 donc par la lecture 41 et l'analyse 42 automatiques du contenu des fichiers intermédiaires de description. Elle peut être itérée 407 aussi souvent que nécessaire, à chaque nouvelle insertion et/ou modification d'une exception et/ou du code logiciel associé à cette dernière, réalisée dans la base de données des exceptions, et jusqu'à ce que l'ensemble du contenu des fichiers de description ait pu être traduit automatiquement dans du code logiciel pouvant être directement inséré dans les composants logiciels constitutifs du service vocal en cours de conception 408.

Il est donc important de souligner que la technique selon l'invention est très avantageuse en ce sens qu'elle permet de capitaliser un volume de code logiciel à l'intérieur de cette base de données d'exceptions. Ce code logiciel peut être réutilisé aisément soit durant les phases ultérieures d'évolution et/ou de maintenance du service vocal interactif, soit être directement réutilisé dans la conception et/ou le développement de nouveaux services vocaux interactifs, seul le code logiciel n'ayant pas déjà été développé et/ou prévu devant être écrit.

L'étape de génération automatique pouvant être facilement itérée après chaque nouvelle modification ou insertion de code logiciel dans la base de données d'exceptions, à chaque nouvelle itération de celle-ci, le code logiciel nouvellement renseigné et/ou modifié sera récupéré, puis inséré dans le code informatique du composant logiciel en cours de génération, sans qu'une nouvelle intervention du développeur ne soit nécessaire.

Une telle approche est nouvelle et inventive dans le domaine de la conception, du développement, de l'évolution et/ou de la maintenance de services vocaux interactifs, par comparaison aux techniques de conceptions connues de l'art antérieur, puisqu'elle permet d'éviter une refonte complète et un re-développement complet du service vocal à concevoir, à faire évoluer ou dont la maintenance doit être assurée.

Elle est donc particulièrement bien adaptée au processus itératif utilisé dans le domaine de la conception de services vocaux interactifs.

De plus, la séparation du processus de génération en plusieurs étapes (prétraitement et génération automatique) permet d'adapter facilement celui-ci à toute nouvelle architecture et à toute nouvelle implémentation de services vocaux, notamment en termes de changement de plate-forme cible, ou de changement de langage de programmation, par exemple.

Une telle séparation permet en outre de pouvoir différencier les modifications de spécifications du dialogue, propres à l'étape de prétraitement, et les modifications concernant les choix d'implémentation et/ou de technologies de mise en oeuvre (type de plate-forme de support du service vocal interactif, langage de programmation, etc.), ces dernières impactant de façon plus sensible l'étape de génération automatique du code logiciel des composants informatiques constitutifs du service vocal interactif

### 6.2 Présentation d'un mode de réalisation préférentiel de l'invention

On présente ci-après un mode de réalisation préférentielle de l'invention au travers la conception et le développement d'une application vocale d'information et d'abonnement du service 3000 de France Telecom (marque déposée). Il s'agit d'une nouvelle application de services vocaux interactifs consultable et interrogeable en langage naturel par un utilisateur qui dispose alors de commandes vocales évoluées lui permettant d'exprimer son besoin et/ou ses requêtes. De telles commandes permettent par exemple à un utilisateur du service vocal, de pouvoir accéder à un service donné pour lequel il ne connaît pas le nom, mais simplement en décrivant la fonctionnalité du service désiré.

De telles commandes permettent également à l'utilisateur du service de formuler librement sa demande, sans connaître a priori la liste des services et/ou des noms de services de France Telecom (marque déposée), en formulant une requête en langage naturel, par exemple : « je souhaiterai réduire le montant de ma facture ».

Dans cette application de service vocal interactif, les spécifications du dialogue du service vocal sont décrites dans un document texte, au format MS Word (marque déposée) respectant un formalisme spécifique, appelé DTMF8.

L'intérêt de ce formalisme est qu'il permet de différencier les guides sonores, les grammaires (du type DTMF ou de reconnaissance vocal, par exemple) qui devront être activés pendant la navigation de l'utilisateur à l'intérieur du service vocal, ou encore, les transitions vers d'autres étapes du dialogues qui devront être activées en fonctions des évènements utilisateurs.

Dans la phase de conception de ce nouveau service vocal, l'étape de prétraitement utilise des macros MS Word (marque déposée) pour effectuer l'analyse du contenu du fichier des spécifications du service vocal.
Il est bien évidemment possible de concevoir ce fichier de spécifications dans un autre format, par exemple XML, l'étape de prétraitement pouvant se réduire alors à l'application d'un parseur XML, par exemple.

L'étape de prétraitement retourne un ensemble de fichiers de description intermédiaires au format XML, définissant notamment :
- les variables du service ;
- les listes des phases du service ;
- la liste des transitions possibles par phase du service;
- les prompts et/ou les guides sonores à jouer par phase du service ;
- les actions conditionnelles par phase du service;
- les commentaires par phase du service;
- les affectations de variable par phase du service;
- les paramètres d'entrée par phase du service.

Dans l'hypothèse où l'étape de prétraitement rencontre une anomalie dans la spécification du dialogue du service vocal, elle est interrompue et une erreur est remontée au concepteur/développeur dans un fichier de logs.

L'étape de prétraitement peut aussi remonter dans le fichier de logs, des informations du type « warning » (ou « alerte » en français), lesquelles permettent de pointer sur des erreurs potentielles, non forcément bloquantes pour la poursuite de son exécution. Ce sera par exemple le cas lorsqu'une phase de dialogue du service vocal est définie dans le fichier de spécifications, mais qu'elle n'est jamais appelée dans le service vocal à concevoir.

De façon avantageuse, des balises de début et de fin peuvent être insérées dans le fichier de spécifications, de façon à délimiter la ou les parties de ce fichier de spécifications devant faire l'objet d'une analyse dans la phase de prétraitement. Par défaut, si de telles balises ne sont pas insérées dans le fichier de spécification du dialogue, l'étape de prétraitement est alors réalisée sur l'ensemble du fichier de spécifications.

L'intérêt de l'utilisation de telles balises repose donc en partie sur la possibilité qu'elles offrent de pouvoir itérer l'étape de génération automatique uniquement sur un sous-ensemble du fichier de spécifications, dans l'hypothèse où seules quelques étapes du dialogue du service vocal seraient modifiées, par exemple dans un contexte d'évolution et/ou de maintenance ultérieur du service vocal, et devraient être regénérées.

Les fichiers de descriptions intermédiaires issus de l'étape de prétraitement et servant d'entrée pour l'étape de génération automatique de code logiciel sont écrits au format XML. Chacun de ces fichiers intermédiaires de description correspond à une phase de dialogue du service vocal et contient l'ensemble des informations provenant du fichier de spécification de dialogue pour la phase correspondante.

L'étape de génération automatique a pour fonction principale, quant à elle, de générer automatiquement le maximum de code informatique des composants logiciels constitutifs du service vocal interactif sur la plate-forme hôte.
Cette étape essentielle a notamment pour objectif de :
- créer un fichier contenant la liste des guides sonores du service vocal interactif ;
- créer l'ossature des composants logiciels constitutifs du service vocal dans un langage cible prédéterminé (Java, Servlets, C, etc. - marques déposées), l'ossature comprenant au moins des éléments du type : entête, inclusions de fichiers, prototypes de méthodes ou de fonctions, etc. ;
- générer tout ou partie du code logiciel, en s'appuyant si besoin, en fonction des exceptions éventuellement survenues durant la génération, sur une base de données d'exceptions, telle que définie précédemment ;
- créer un fichier contenant la liste des phases du service vocal à finaliser, lesquelles correspondent aux différentes exceptions pour lesquelles un code logiciel associé n'était pas encore renseigné dans la base de données des exceptions et qui nécessitaient donc un développement logiciel complémentaire par le développeur de l'application.

Si pendant l'exécution de l'étape de génération automatique une ou plusieurs expressions de la spécification du dialogue n'a pu être interprétée et/ou traduite automatiquement, deux cas de figure se présentent alors.

Soit l'exception rencontrée existe déjà 46 dans la base de données des exceptions et dans ce cas :
- si du code logiciel est déjà associé à une occurrence de cette exception dans la base de données d'exceptions 47, la génération utilise ce code logiciel et l'insère 48 dans le code logiciel du composant logiciel en phase de génération ;
- si aucun code logiciel n'est associé 403 à une occurrence de cette exception dans la base de données d'exceptions, l'exception est recopiée 401 sous la forme d'un commentaire à l'intérieur du code logiciel du composant logiciel à générer et la phase courante du service vocal à générer est insérée dans un fichier contenant les phases du service vocal à finaliser ultérieurement.

Soit l'exception rencontrée n'existe pas déjà 49 dans la base de données des exceptions et dans ce cas, l'exception est recopiée 401 sous la forme d'un commentaire à l'intérieur du code logiciel du composant logiciel à générer et insérée à l'intérieur de la base de données des exceptions.

La gestion et le traitement des exceptions selon l'invention interviennent essentiellement lorsque certaines des expressions des fichiers intermédiaires de description correspondant à certaines spécifications du dialogue ne peuvent être directement interprétées durant l'étape de génération (par exemple : « le service récupère le profil de l'appelant en base »).

De telles expressions sont parfois répétées à plusieurs endroits dans la spécification, ce qui justifie avantageusement de définir une seule et unique fois leur traduction en termes de code logiciel à générer lequel pourra ensuite être réutiliser 407 pour chaque instance d'une même expression rencontrée dans un même fichier intermédiaire de description, ou bien dans des fichiers intermédiaires de descriptions distincts.

Une telle gestion des exceptions permet en outre de garder en mémoire au moins une partie du code logiciel réalisé manuellement par le développeur, ce qui favorise la réutilisation automatique de celui-ci à chaque nouvelle itération de l'étape de génération automatique des composants logiciels constitutifs du service vocal interactif

Pour plus de facilité d'exploitation, la base de données de exceptions est créée et accédée sur la machine où l'étape de génération automatique est exécutée, et pour plus de confort dans la conception et le développement du service vocal, une interface graphique de gestion des exceptions et d'interaction avec la base de données des exceptions est définies.

Cette interface de gestion est rendue accessible au moyen d'un navigateur Web. Elle permet notamment de consulter la liste de toutes les exceptions présentes dans la base de données des exceptions, et d'ajouter et/ou de modifier et/ou de supprimer un code logiciel particulier à une exception déterminée. Cette interface de gestion permet également de créer en base de nouvelles exceptions et de leur associer un code logiciel correspondant, ou encore d'importer dans la base de données d'exceptions des données contenues dans un fichier texte.

Enfin, dans le cas d'une utilisation d'un fichier de spécifications au format MS Word (marque déposée), une interface contextuelle complémentaire permet de naviguer parmi l'ensemble des exceptions directement à partir du fichier MS Word, ce qui permet en outre de parcourir les différentes phases du service vocal interactif à mettre en oeuvre et, pour chacune d'elle, de pouvoir consulter les exceptions qui leurs sont éventuellement associées.

L'invention repose donc sur une approche nouvelle et inventive de conception de services vocaux interactifs reposant sur la génération automatique d'au moins une partie des composants logiciels constitutifs du service vocal à mettre en oeuvre. Elle repose également sur une gestion et/ou un traitement efficace d'un ensemble d'exceptions pouvant survenir durant la phase de génération automatique, à partir d'une base de données d'exceptions pouvant être associées dans la base de données à du code logiciel adéquate et directement utilisable et/ou réutilisable. Une telle approche permet donc de simplifier sensiblement le processus de conception et/ou de développement et/ou d'évolution et/ou de maintenance de tels services vocaux interactifs et accessibles sur des plates-formes hôtes.

## Revendications

1. Procédé de conception d'un service vocal interactif accessible sur une plate-forme depuis un terminal client, **caractérisé en ce qu'**il comprend les étapes suivantes de:
- prétraitement (32) d'un ensemble de données de spécifications se présentant sous la forme d'un fichier (31) de format prédéterminé de spécifications du dialogue définissant ledit service vocal, de façon à traduire chaque phase dudit dialogue identifiée dans ledit ensemble de données de spécifications sous la forme d'au moins un fichier (33) de description intermédiaire de format prédéterminé ;
- génération (34) automatique d'au moins un composant logiciel (37) constitutif dudit service vocal, à partir dudit au moins un fichier (33) de description intermédiaire et/ou de la recherche de la présence d'un code logiciel à insérer dans ledit composant logiciel (37), dans une base de données (35), dite base de données d'exceptions, contenant un ensemble d'exceptions prédéterminées.

2. Procédé de conception d'un service vocal interactif selon la revendication 1, **caractérisé en ce qu'**il comprend une étape préliminaire à ladite étape de génération (34) automatique, de renseignement (36, 38, 39) dudit ensemble d'exceptions dans ladite base de données d'exceptions (35) de façon à associer, un code logiciel prédéterminé à chacune desdites exceptions.

3. Procédé de conception d'un service vocal interactif selon l'une quelconque des revendications 1 et 2, **caractérisé en ce que** ladite étape de génération (34) automatique d'au moins un composant logiciel (37) comprend au moins les sous étapes suivantes :
- d'interprétation (42) automatique d'au moins une expression dudit au moins un fichier (33) de description intermédiaire ;
- de création d'au moins un fichier contenant au moins une liste des guides sonores et/ou des grammaires dudit service vocal ;
- de création de l'ossature de chacun dudit au moins un composant logiciel (37) dans un langage de programmation prédéterminé, ladite ossature comprenant au moins l'un des éléments suivants :
■ une entête ;
■ une liste d'inclusions de fichiers ;
■ un prototype de méthode et/ou de fonction ;
- de génération d'au moins une partie du code informatique formant ledit au moins un composant logiciel.

4. Procédé de conception d'un service vocal interactif selon la revendication 3, **caractérisé en ce que** si ladite sous étape (42) d'interprétation automatique ne permet pas d'interpréter (43) une expression dudit au moins un fichier de description intermédiaire (33), elle génère une exception dont elle recherche (45) la présence dans ladite base de données d'exceptions (35), de telle façon que :
- si l'exception générée existe déjà (46) dans ladite base de données d'exceptions (35) on réalise l'une des sous étapes suivantes de :
■ si ledit code logiciel prédéterminé associé à ladite exception n'est pas disponible (403) dans ladite base de données d'exceptions (35), insertion (401) de ladite exception générée sous la forme d'un commentaire, à l'intérieur dudit code informatique formant ledit au moins un composant logiciel (37) et ajout de la phase pour laquelle ledit code informatique n'a pu être complètement généré dans un fichier des phases à finaliser ;
■ si ledit code logiciel prédéterminé associé à ladite exception est disponible (47) dans ladite base de données d'exceptions (35), insertion (48) dudit code logiciel prédéterminé à l'intérieur dudit code informatique formant ledit au moins un composant logiciel (37) ;
- si l'exception générée n'existe pas (49) dans ladite base de données d'exceptions (35) :
■ recopie (402) de ladite exception générée dans ladite base de données des exceptions (35) et déclenchement d'une alerte visant à notifier le besoin d'une mise en correspondance de ladite exception générée avec un code informatique correspondant ;
■ insertion (401, 404) de ladite exception générée sous la forme d'un commentaire, à l'intérieur dudit code informatique formant ledit au moins un composant logiciel (37).

5. Procédé de conception d'un service vocal interactif selon l'une quelconque des revendications 1 à 4, **caractérisé en ce que** pour chaque nouvelle insertion ou modification d'un code logiciel associé à une exception de ladite base d'exceptions (35), on réitère ladite étape de génération (34) automatique, de façon que ledit nouveau code logiciel ajouté (402) ou modifié soit inséré dans ledit au moins un composant logiciel (37) correspondant intervenant dans ledit service vocal.

6. Procédé de conception d'un service vocal interactif selon les revendications 4 et 5, **caractérisé en ce qu'**à chaque itération de ladite étape de génération (34), on retire dudit fichier des phases à finaliser, lesdites phases dudit service vocal pour lesquelles lesdits composants logiciels (37) ont pu être générés.

7. Procédé de conception d'un service vocal interactif selon l'une quelconque des revendications 1 à 6, **caractérisé en ce que** ladite étape (32) de prétraitement dudit ensemble (31) de données de spécifications est réalisée au moins une fois et comprend au moins les sous étapes suivantes :
- d'analyse du contenu d'au moins une partie dudit fichier de spécifications, ladite au moins une partie à analyser étant comprise entre une première balise de début et une deuxième balise de fin ;
- d'extraction des informations utiles représentatives dudit service vocal interactif depuis ledit fichier de spécifications (31), lesdites informations utiles appartenant au groupe comprenant au moins :
■ les variables dudit service ;
■ les listes des phases dudit service ;
■ la liste des transitions possibles par phase dudit service;
■ les prompts et/ou les guides sonores à jouer par phase dudit service ;
■ les actions conditionnelles par phase dudit service;
■ les commentaires par phase dudit service;
■ les affectations de variable par phase dudit service;
■ les paramètres d'entrée par phase dudit service ;
- de contrôle de la cohérence desdites données dudit fichier de spécifications (31), de façon à générer un fichier contenant l'ensemble des éventuelles anomalies détectées durant ladite étape (32) de prétraitement.

8. Procédé de conception d'un service vocal interactif selon la revendication 7, **caractérisé en ce que** lorsque ladite analyse s'effectue sur l'ensemble dudit fichier de spécifications, ladite balise de début correspond audit début dudit fichier de spécifications et ladite balise de fin correspond à la fin dudit fichier de spécifications (31).

9. Procédé de conception d'un service vocal interactif selon l'une quelconque des revendications 1 à 8, **caractérisé en ce que** ledit fichier (33) de description intermédiaire est décrit dans un format prédéterminé du type appartenant au groupe comprenant au moins les éléments suivants :
- les variables dudit service vocal interactif et leur type;
- les listes des phases dudit service.

10. Produit programme d'ordinateur, **caractérisé en ce qu'**il comprend des instructions de code de programme pour l'exécution des étapes du procédé selon l'une quelconque des revendications 1 à 9, lorsque ledit programme est exécuté dans et/ou par un processeur.

11. Dispositif de conception d'un service vocal interactif accessible sur une plate-forme depuis un terminal client, **caractérisé en ce qu'**il comprend au moins :
- des moyens de prétraitement (32) d'un ensemble de données de spécifications (31) se présentant sous la forme d'un fichier de format prédéterminé de spécifications du dialogue définissant ledit service vocal, de façon à traduire chaque phase dudit dialogue identifiée dans ledit ensemble de données de spécifications (31) sous la forme d'au moins un fichier (33) de description intermédiaire de format prédéterminé ;
- des moyens de génération (34) automatique d'au moins un composant logiciel (37) constitutif dudit service vocal, à partir dudit au moins un fichier (33) de description intermédiaire et/ou d'une base de données, dite base de données d'exceptions (35), contenant un ensemble d'exceptions pouvant survenir durant une phase de génération (34) automatique dudit au moins un composant logiciel (37).
- des moyens de recherche de la présence dans ladite base de données d'exceptions d'un code logiciel à insérer dans ledit composant logiciel (37), lorsqu'une exception survient durant ladite phase (34) de génération automatique.

12. Dispositif de conception d'un service vocal interactif selon la revendication 11, **caractérisé en ce qu'**il comprend en outre des moyens d'édition et/ou de sélection des exceptions de ladite base de données d'exceptions (35) à utiliser durant ladite phase (34) de génération automatique.

13. Générateur de code pour service vocal interactif accessible sur une plate-forme depuis un terminal client, **caractérisé en ce qu'**il comprend un dispositif selon les revendications 11 et 12.

14. Service vocal interactif accessible depuis un terminal client sur une plateforme, **caractérisé en ce qu'**il est conçu au moyen d'un générateur de code pour service vocal interactif selon la revendication 13.
